# EUROPÄISCHE PATENTSCHRIFT

(11) **EP 4 375 560 B1**
(45) Veröffentlichungstag und Bekanntmachung des Hinweises auf die Patenterteilung: **17.06.2026**
(21) Anmeldenummer: 23203990.9
(22) Anmeldetag: 17.10.2023
(51) Int. Cl.: F17C 5/06, B60S 5/02

(54) **TRANSPORTABLE TANKSTELLE FÜR DRUCKFLUIDE**
TRANSPORTABLE FILLING STATION FOR PRESSURIZED FLUIDS
STATION-SERVICE TRANSPORTABLE POUR FLUIDES SOUS PRESSION

(30) Priorität: 22.11.2022 AT 508822022
(43) Veröffentlichungstag der Anmeldung: 29.05.2024
(73) Patentinhaber: Wolftank-Adisa Holding AG, 6020 Innsbruck (AT)
(72) Erfinder: LECHTHALER, Markus, 39100 Bozen (IT); NEUGÄRTNER, Jörg, 93051 Regensburg (DE); WERTH, Peter, 39057 Eppan an der Weinstraße (IT)
(74) Vertreter: Weiser Voith Gugler Patentanwälte Partnerschaft

(56) Entgegenhaltungen:
- WO-A1-2020/161159
- US-A- 5 350 442
- US-A1- 2015 020 918
- US-B2- 9 377 164
- US-B2- 9 482 388

## Beschreibung

Die vorliegende Erfindung betrifft eine transportable Tankstelle für Druckfluide, insbesondere Wasserstoff oder Flüssigerdgas, umfassend einen bodenaufstellbaren ersten Container mit einer Vorderseite, einer Rückseite, zwei Lateralseiten und einem an einen externen Druckfluidvorrat über Fluidschaltungskomponenten, die von einer elektrischen Steuerung steuerbar sind, anschließbaren Dispenser für Druckfluid, wobei der erste Container eine zur Rückseite parallele erste Tragstruktur und eine zur Vorderseite parallele zweite Tragstruktur enthält.

Eine Tankstelle dieser Art ist aus der US 2015/0020918 A1 bekannt.

Tankstellen für Wasserstoff oder Flüssigerdgas (Liquefied Natural Gas, LNG) müssen strengen Sicherheitsanforderungen an Brand- und Explosionsschutz genügen. In der Europäischen Union wurden dazu beispielsweise die ATEX-Produkt- und -Betriebsrichtlinien 2014/34/EU und 1999/92/EG erlassen, welche beim Betrieb von solchen Tankstellen einzuhalten sind. Dies gestaltet sich besonders schwierig, wenn eine Tankstelle rasch vor Ort aufgestellt werden soll, beispielsweise zur temporären Versorgung von Einsatzfahrzeugen im Katastrophendienst, von Baufahrzeugen auf Baustellen oder im Bergbau, oder zur Betankung von Transportmitteln des öffentlichen Verkehrs oder im militärischen Bereich.

Die Erfindung setzt sich zum Ziel, eine transportable Tankstelle für Druckfluide zu schaffen, welche rasch vor Ort aufgestellt und in Betrieb genommen werden kann und die strengen Sicherheitsanforderungen, die für die Handhabung von brennbaren Gasgemischen gelten, erfüllt.

Dieses Ziel wird mit einer transportablen Tankstelle für Druckfluide erreicht, die sich erfindungsgemäß auszeichnet durch
einen bodenaufstellbaren ersten Container mit einer Vorderseite, einer Rückseite, zwei Lateralseiten und einem an einen externen Druckfluidvorrat über Fluidschaltungskomponenten, die von einer elektrischen Steuerung des ersten Containers steuerbar sind, anschließbaren Dispenser für Druckfluid,
wobei der erste Container eine zur Rückseite parallele erste Tragstruktur und eine zur Vorderseite parallele zweite Tragstruktur enthält,
wobei die Tragstrukturen zwischeneinander einen Durchgang bilden, der über Öffnungen in den Lateralseiten von Umgebungsluft frei durchströmbar ist, und
wobei zumindest eine der beiden Tragstrukturen durchgangszugewandt die Fluidschaltungskomponenten und die zweite Tragstruktur durchgangsabgewandt den Dispenser trägt.

Die Erfindung schafft ein containerisiertes Modul für den raschen Aufbau einer Tankstelle vor Ort, welches alle für den Tankstellenbetrieb erforderlichen Fluidschaltungskomponenten und elektrischen Komponenten enthält, und zwar in einer brand- und explosionsgeschützten Anordnung. Die Fluidschaltungskomponenten sind dem zentralen Durchgang des Containers zugewandt. Jegliche Druckfluiddämpfe, die aufgrund eines Gebrechens oder Undichtigkeiten im Betrieb aus den Fluidschaltungskomponenten entweichen, werden durch den Umgebungsluftzug im Durchgang auf ein ungefährliches, nicht zündfähiges Gemisch verdünnt und abgeführt. Gleichzeitig sind die Fluidschaltungskomponenten im Durchgang gut geschützt und dennoch für Wartung und Reparatur gut zugänglich.

Besonders vorteilhaft ist es, wenn jede Lateralseite eine Öffnung aufweist, welche die gesamte lichte Weite des dort ausmündenden Durchgangs einnimmt, um die Durchlüftung des Durchgangs und damit die Sicherheit der Tankstelle zu maximieren. Bevorzugt werden die Öffnungen mit Absperrgittern versehen, um im Betrieb den Zugang von Unbefugten zu den Fluidschaltungskomponenten zu verhindern.

In einer besonders bevorzugten Ausführungsform der Erfindung ist die erste Tragstruktur bezüglich der Rückseite in das Containerinnere zurückversetzt, um eine von der Rückseite her zugängliche erste Bucht zur Aufnahme der elektrischen Steuerung zu bilden. Dadurch ist die elektrische Steuerung vom Durchgang mit den Fluidschaltungskomponenten abgesondert, sodass die Gefahr einer Funkenzündung selbst im Fall eines gleichzeitigen Gebrechens in der elektrischen Steuerung und Undichtigkeiten in den Fluidschaltungskomponenten minimiert ist.

Bevorzugt ist dazu die erste Bucht zur ersten Tragstruktur hin durch eine Trennwand geschlossen, um eine mechanische Barriere für Dämpfe aus dem Durchgang zur Aufnahmebucht für die elektrische Schaltung zu schaffen.

In einer weiteren bevorzugten Ausführungsform der Erfindung ist die zweite Tragstruktur bezüglich der Vorderseite in das Containerinnere zurückversetzt, um eine von der Vorderseite her zugängliche zweite Bucht zur Aufnahme des Dispensers zu bilden. Bei entsprechender Dimensionierung kann damit erreicht werden, dass der Dispenser nicht über die Vorderseite des Containers vorragt, sodass er beim Transport der Tankstelle gut geschützt ist.

Bevorzugt kann die zweite Tragstruktur durchgangsabgewandt eine elektrische Schalttafel zur Bedienung der elektrischen Steuerung und durchgangszugewandt Hilfs-Fluidschaltungskomponenten für den Dispenser tragen. Die Hilfs-Fluidschaltungskomponenten sind damit ebenfalls dem Umgebungsluftzug im Durchgang ausgesetzt, sodass allenfalls daraus entweichende Dämpfe auf ein unkritisches, nicht zündfähiges Maß verdünnt werden. Die elektrische Schalttafel ist vom Benutzer direkt neben dem Dispenser bedienbar und, wenn die zweite Tragstruktur eine Aufnahmebucht für den Dispenser bildet, ebenso wie dieser in der Bucht gut geschützt.

In einem weiteren Aspekt umfasst die erfindungsgemäße Tankstelle einen an die Fluidschaltungskomponenten in Fluidverbindung angeschlossenen externen Druckfluidvorrat, welcher ein Speichermodul für Druckfluid und ein Verdichtermodul zum Druckverdichten des Druckfluids aufweist, wobei das Verdichtermodul von der elektrischen Steuerung des ersten Containers gesteuert ist. Die Tankstelle besteht damit aus drei einzeln leicht transportierbaren und vor Ort zusammenstellbaren Modulen, und zwar dem Speichermodul, dem Verdichtermodul und dem beschriebenen ersten Container als jenes Modul, das alle elektrischen und Fluidschaltungskomponenten für den Betrieb der Tankstelle brand- und explosionssicher in sich vereint.

Zur Erleichterung des Transports kann das Verdichtermodul in einem zweiten bodenabstellbaren Container und/oder das Speichermodul in einem dritten bodenabstellbaren Container oder auf einem Tankwagen angeordnet sein.

Die Erfindung wird nachstehend anhand eines in den beigeschlossenen Zeichnungen dargestellten Ausführungsbeispiels näher erläutert. In den Zeichnungen zeigt:
Fig. 1 die Tankstelle der Erfindung in einem schematischen Blockschaltbild;
Fig. 2 den ersten Container der Tankstelle von Fig. 1 in einer Perspektivansicht; und
Fig. 3 eine teilweise aufgebrochene Seitenansicht des ersten Containers von Fig. 2.

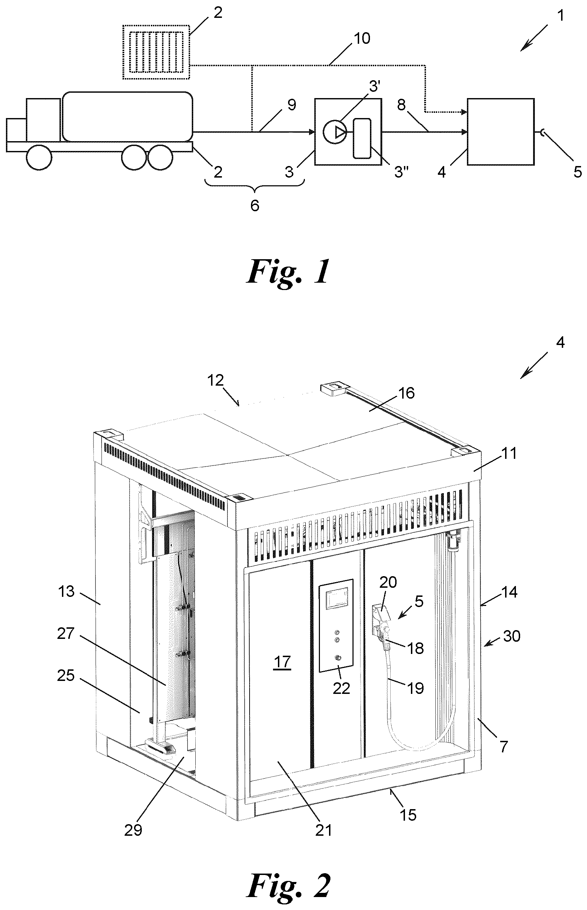

Fig. 1 zeigt eine transportable Tankstelle 1 für Druckfluide wie Wasserstoff, Flüssigerdgas (Liquefied Natural Gas, LNG) od.dgl. Die Tankstelle 1 ist in einzeln transportierbare Module unterteilt, und zwar ein Speichermodul 2 für Druckfluid, ein daran angeschlossenes (optionales) Verdichtermodul 3 zum Druckverdichten des Druckfluids, und ein an das Speichermodul 2 und/oder das Verdichtermodul 3 angeschlossenes Dispensermodul 4, das den eigentlichen Dispenser 5 zum Betanken eines (nicht dargestellten) Fahrzeugs darbietet. Das Speichermodul 2 und das optionale Verdichtermodul 3 bilden einen Druckfluidvorrat 6 zur Speisung des Dispensermoduls 4.

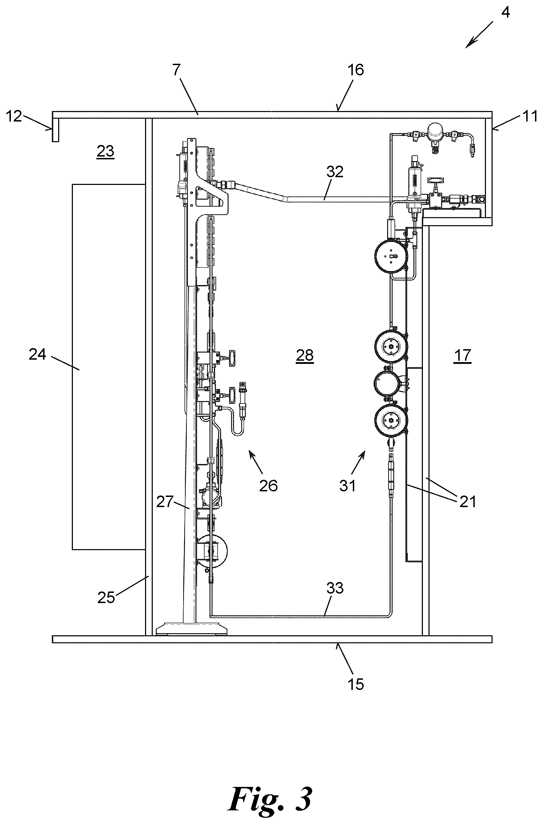

Das Dispensermodul 4 ist in Form eines bodenaufstellbaren ("ersten") Containers 7 ausgebildet, der später anhand der Fig. 2 und 3 noch ausführlicher erläutert wird. Das optionale Verdichtermodul 3 kann ebenfalls in Form eines bodenaufstellbaren ("zweiten") Containers ausgebildet sein und enthält entsprechende Kompressoren 3' zum Verdichten des Druckfluids und einen Hochdruckspeicher 3" zur Zwischenspeicherung des hochdruckverdichteten Druckfluids. Das Speichermodul 2 kann seinerseits in Form eines bodenaufstellbaren ("dritten") Containers ausgebildet sein, der beispielsweise eine Batterie von Druckgasflaschen enthält (punktiert gezeigt). Alternativ kann das Speichermodul 2 auf einem Tankwagen angeordnet sein, beispielsweise in Form einer oder mehrerer Druckbehälter oder Druckgasflaschen. Entsprechende Verbindungsleitungen 8 - 10 führen das Druckfluid vom Speichermodul 2 direkt oder über das Verdichtermodul 3 zum Dispensermodul 4.
Gemäß den Fig. 2 und 3 hat der das Dispensermodul 4 bildende erste Container 7 würfel- bzw. quaderförmige Gestalt, mit einer Vorderseite 11, einer Rückseite 12, zwei Lateralseiten 13, 14, einer Bodenseite 15 und einer Deckseite 16. Der Container 7 könnte jedoch auch andere Gestalt haben, z.B. polyederförmig, prismatisch, teilweise abgerundet usw., solange er für die hier beschriebenen Zwecke zumindest eine Vorderseite 11, eine Rückseite 12 und zwei einander gegenüberliegende Lateralseiten 13, 14 ausformt.

An der Vorderseite 11, genauer in einer Bucht 17 der Vorderseite 11, ist der Dispenser 5 in Form einer Zapfpistole 18 mit Versorgungschlauch 19 und Halterung 20 angeordnet. Der Boden ("Buchtgrund") der Bucht 17 wird von einer wandartigen Tragstruktur 21 gebildet, die etwa parallel zur Vorderseite 11 verläuft und bezüglich der Vorderseite 11 des Containers 7 in das Containerinnere zurückversetzt ist. Die Tragstruktur 21 trägt einerseits den Dispenser 5 und anderseits eine elektrische Schalttafel 22 zur Bedienung des Dispensermoduls 4 durch den Benutzer.

Die Rückseite 12 des Containers 7 hat eine weitere Bucht 23 zur Aufnahme einer elektrischen Steuerung 24 für das Dispensermodul 4 und optional auch für das Verdichtermodul 3 und/oder das Speichermodul 2. Der Buchtgrund der Bucht 23 ist dabei durch eine bezüglich der Rückseite 12 in das Containerinnere zurückversetzte Trennwand 25 gebildet.

Im Inneren des Containers 7 sind alle Fluidschaltungskomponenten 26 für den Betrieb der Tankstelle 1 aufgenommen. Die Fluidschaltungskomponenten 26 umfassen all jene Komponenten, die - über die reinen Verbindungsleitungen hinaus - mit Druckfluid beaufschlagt sind, wie Absperrhähne, steuerbare Ventile, Pumpen, Thermometer, Druckmesser usw. Die Fluidschaltungskomponenten 26 sind an einer wandartigen Tragstruktur 27 montiert, welche parallel zur Rückseite 12 und bezüglich der Rückseite 12 in das Containerinnere zurückversetzt und (von außen gesehen) hinter der Trennwand 25 verläuft.

Zwischen der Tragstruktur 27 für die Fluidschaltungskomponenten 26 und der Tragstruktur 21 für den Dispenser 5 ist ein von Personen betretbarer Durchgang 28 vorgesehen, welcher den Container 7 durchsetzt und somit an jeder Lateralseite 13, 14 über eine Öffnung 29, 30 ins Freie ausmündet.

Die Öffnungen 29, 30 können durch eine Vielzahl von Durchbrechungen oder, wie in dem gezeigten Beispiel, durch jeweils eine große zentrale Durchbrechung in den Lateralseiten 13, 14 gebildet sein. Insbesondere kann jede Öffnung 29, 30 die gesamte lichte Weite des auf der jeweiligen Lateralseite 13, 14 ausmündenden Durchgangs 28 einnehmen, sodass der Durchgang 28 zur Gänze frei von Umgebungsluft durchströmt werden kann. Jede Öffnung 29, 30 kann dabei mit einem Absperrgitter (nicht gezeigt) versehen werden, um den Zugang von Unbefugten in den Durchgang 28 zu verhindern.

Die an der Tragstruktur 27 dem Durchgang 28 zugewandt montierten Fluidschaltungskomponenten 26 sind der durchströmenden Konvektion der Umgebungsluft im Durchgang 28 frei ausgesetzt. Die zweite Tragstruktur 21 kann optional auf ihrer dem Durchgang 28 zugewandten Seite Hilfs-Fluidschaltungskomponenten 31 für den Dispenser 5 tragen, so dass diese ebenfalls der Luftkonvektion im Durchgang 28 frei ausgesetzt sind.

Zwischen den Fluidschaltungskomponenten 26 und den Hilfs-Fluidschaltungskomponenten 31 können entsprechende Verbindungsleitungen 32, 33 im Container 7 verlaufen. Entsprechende elektrische Verbindungen zwischen der Schalttafel 22, der elektrischen Steuerung 24 und dem Druckfluidvorrat 6 sind der Einfachheit halber nicht gezeigt.

In einer beispielhaften Ausführungsform ist der Container 7 ein standardisierter 20-Fuß-Container. Die Breite des Durchgangs 28, d.h. der Abstand der einander zugewandten Seiten der Tragstrukturen 27, 21 (ohne montierte Fluidschaltungskomponenten 26 und Hilfs-Fluidschaltungskomponenten 31) beträgt z.B. 60 - 100 cm, die Breite der Öffnungen 29, 30 z.B. 60 - 150 cm und die Tiefe der Buchten 17, 23 z.B. 40 - 60 cm. Es versteht sich, dass diese Dimensionen nur beispielhaft sind und entsprechend den Anforderungen abgewandelt werden können.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Transportable Tankstelle für Druckfluide, insbesondere Wasserstoff oder Flüssigerdgas, umfassend einen bodenaufstellbaren ersten Container (7) mit einer Vorderseite (11), einer Rückseite (12), zwei Lateralseiten (13, 14) und einem an einen externen Druckfluidvorrat (6) über Fluidschaltungskomponenten (26), die von einer elektrischen Steuerung (24) des ersten Containers (7) steuerbar sind, anschließbaren Dispenser (5) für Druckfluid,
wobei der erste Container (7) eine zur Rückseite (12) parallele erste Tragstruktur (27) und eine zur Vorderseite (11) parallele zweite Tragstruktur (21) enthält,
**dadurch gekennzeichnet, dass** die Tragstrukturen (21, 27) zwischeneinander einen Durchgang (28) bilden, der über Öffnungen (29, 30) in den Lateralseiten (13, 14) von Umgebungsluft frei durchströmbar ist,
wobei zumindest eine der beiden Tragstrukturen (21, 27) durchgangszugewandt die Fluidschaltungskomponenten (26) und die zweite Tragstruktur (21) durchgangsabgewandt den Dispenser (5) trägt.

2. Tankstelle nach Anspruch 1, **dadurch gekennzeichnet, dass** jede Lateralseite (13, 14) eine Öffnung (29, 30) aufweist, welche die gesamte lichte Weite des dort ausmündenden Durchgangs (28) einnimmt.

3. Tankstelle Anspruch 2, **dadurch gekennzeichnet, dass** die Öffnungen (29, 30) mit Absperrgittern versehen sind.

4. Tankstelle nach einem der Ansprüche 1 bis 3, **dadurch gekennzeichnet, dass** die erste Tragstruktur (27) bezüglich der Rückseite (12) in das Containerinnere zurückversetzt ist, um eine von der Rückseite her zugängliche erste Bucht (23) zur Aufnahme der elektrischen Steuerung (24) zu bilden.

5. Tankstelle nach Anspruch 4, **dadurch gekennzeichnet, dass** die erste Bucht (23) zur ersten Tragstruktur (27) hin durch eine Trennwand (25) geschlossen ist.

6. Tankstelle nach einem der Ansprüche 1 bis 5, **dadurch gekennzeichnet, dass** die zweite Tragstruktur (21) bezüglich der Vorderseite (11) in das Containerinnere zurückversetzt ist, um eine von der Vorderseite (11) her zugängliche zweite Bucht (17) zur Aufnahme des Dispensers (5) zu bilden.

7. Tankstelle nach einem der Ansprüche 1 bis 6, **dadurch gekennzeichnet, dass** die zweite Tragstruktur (21) durchgangsabgewandt eine elektrische Schalttafel (22) zur Bedienung der elektrischen Steuerung (24) und durchgangszugewandt Hilfs-Fluidschaltungskomponenten (31) für den Dispenser (5) trägt.

8. Tankstelle nach einem der Ansprüche 1 bis 7, umfassend einen an die Fluidschaltungskomponenten (26) in Fluidverbindung angeschlossenen externen Druckfluidvorrat (6), welcher ein Speichermodul (2) für Druckfluid und ein Verdichtermodul (3) zum Druckverdichten des Druckfluids aufweist, wobei das Verdichtermodul (3) von der elektrischen Steuerung (24) des ersten Containers (7) gesteuert ist.

9. Tankstelle nach Anspruch 8, **dadurch gekennzeichnet, dass** das Verdichtermodul (3) in einem zweiten bodenabstellbaren Container angeordnet ist.

10. Tankstelle nach Anspruch 8 oder 9, **dadurch gekennzeichnet, dass** das Speichermodul (2) in einem dritten bodenabstellbaren Container oder auf einem Tankwagen angeordnet ist.

## Claims

1. A transportable filling station for pressurised fluids, in particular hydrogen or liquefied natural gas, comprising a first container (7) which can be placed on the ground with a front side (11), a rear side (12), two lateral sides (13, 14) and a pressurised-fluid dispenser (5) which can be connected to an external pressurised fluid supply (6) via fluid circuit components (26) that can be controlled by an electric control (24) of the first container (7),
wherein the first container (7) includes a first support structure (27) parallel to the rear side (12) and a second support structure (21) parallel to the front side (11),
**characterised in that** the support structures (21, 27) form a passage (28) between them through which ambient air can flow freely via openings (29, 30) in the lateral sides (13, 14),
wherein at least one of the two support structures (21, 27) supports, facing the passage, the fluid circuit components (26) and the second support structure (21) supports, facing away from the passage, the dispenser (5).

2. The filling station according to claim 1, **characterised in that** each lateral side (13, 14) has an opening (29, 30) which occupies the entire internal width of the passage (28) opening out there.

3. The filling station according to claim 2, **characterised in that** the openings (29, 30) are provided with barrier grilles.

4. The filling station according to any one of claims 1 to 3, **characterised in that** the first support structure (27) is set back relative to the rear side (12) into the interior of the container in order to form a first bay (23) accessible from the rear side for accommodating the electric control (24).

5. The filling station according to claim 4, **characterised in that** the first bay (23) is closed to the first support structure (27) by a separating wall (25).

6. The filling station according to any one of claims 1 to 5, **characterised in that** the second support structure (21) is set back relative to the front side (11) into the interior of the container to form a second bay (17) accessible from the front side (11) for accommodating the dispenser (5).

7. The filling station according to any one of claims 1 to 6, **characterised in that** the second support structure (21) supports, facing away from the passage, an electric control panel (22) for operating the electric control (24) and supports, facing the passage, auxiliary-fluid circuit components (31) for the dispenser (5).

8. The filling station according to any one of claims 1 to 7, comprising an external pressurised fluid supply (6) connected to the fluid circuit components (26) in fluid communication, the external pressurised fluid supply having a storage module (2) for pressurised fluid and a compressor module (3) for pressurising the pressurised fluid, wherein the compressor module (3) is controlled by the electric control (24) of the first container (7).

9. The filling station according to claim 8, **characterised in that** the compressor module (3) is arranged in a second container which can be placed on the ground.

10. The filling station according to claim 8 or 9, **characterised in that** the storage module (2) is arranged in a third container, which can be placed on the ground, or on a tank wagon.

## Revendications

1. Station-service transportable pour fluides sous pression, en particulier hydrogène ou gaz naturel liquéfié, comprenant un premier conteneur (7) pouvant être posé sur le sol avec un côté avant (11), un côté arrière (12), deux côtés latéraux (13, 14) et un distributeur (5) pour fluide sous pression pouvant être relié à une réserve de fluide sous pression externe (6) par le biais de composants de circuit fluidique (26) qui peuvent être commandés par une commande électrique (24) du premier conteneur (7),
où le premier conteneur (7) contient une première structure porteuse (27) parallèle au côté arrière (12) et une deuxième structure porteuse (21) parallèle au côté avant (11),
**caractérisée en ce que** les structures porteuses (21, 27) forment entre elles un passage (28), à travers lequel l'air ambiant peut circuler librement par le biais d'ouvertures (29, 30) dans les côtés latéraux (13, 14),
où au moins l'une des deux structures porteuses (21, 27) porte, orientée vers le passage, les composants de circuit fluidique (26) et la deuxième structure porteuse (21) porte, orientée à l'opposé du passage, le distributeur (5).

2. Station-service selon la revendication 1, **caractérisée en ce que** chaque côté latéral (13, 14) présente une ouverture (29, 30) qui occupe toute la largeur intérieure du passage (28) qui y débouche.

3. Station-service selon la revendication 2, **caractérisée en ce que** les ouvertures (29, 30) sont pourvues de grilles d'arrêt.

4. Station-service selon l'une quelconque des revendications 1 à 3, **caractérisée en ce que** la première structure porteuse (27) est disposée en retrait par rapport au côté arrière (12) à l'intérieur du conteneur afin de former une première baie (23) accessible depuis le côté arrière pour le logement de la commande électrique (24).

5. Station-service selon la revendication 4, **caractérisée en ce que** la première baie (23) est fermée vers la première structure porteuse (27) par une paroi de séparation (25).

6. Station-service selon l'une quelconque des revendications 1 à 5, **caractérisée en ce que** la deuxième structure porteuse (21) est disposée en retrait par rapport au côté avant (11) à l'intérieur du conteneur afin de former une deuxième baie (17) accessible depuis le côté avant (11) pour le logement du distributeur (5).

7. Station-service selon l'une quelconque des revendications 1 à 6, **caractérisée en ce que** la deuxième structure porteuse (21) porte, orientée à l'opposé du passage, un tableau de commande électrique (22) pour la commande de la commande électrique (24) et porte, orientée vers le passage, des composants de circuit fluidique auxiliaires (31) pour le distributeur (5).

8. Station-service selon l'une quelconque des revendications 1 à 7, comprenant une réserve de fluide sous pression externe (6) reliée en communication fluidique aux composants de circuit fluidique (26), laquelle présente un module de stockage (2) pour fluide sous pression et un module de compression (3) pour la compression du fluide sous pression, où le module de compression (3) est commandé par la commande électrique (24) du premier conteneur (7).

9. Station-service selon la revendication 8, **caractérisée en ce que** le module de compression (3) est disposé dans un deuxième conteneur pouvant être posé sur le sol.

10. Station-service selon la revendication 8 ou 9, **caractérisée en ce que** le module de stockage (2) est disposé dans un troisième conteneur, pouvant être posé sur le sol, ou sur un camion-citerne.
